# FASCICULE DE BREVET EUROPEEN

(11) **EP 0 906 648 B1**
(45) Date de publication et mention de la délivrance du brevet: **03.07.2002**
(21) Numéro de dépôt: 98917242.4
(22) Date de dépôt: 26.03.1998
(51) Int. Cl.: H02B 13/035

(54) **CELLULE ELECTRIQUE A CAISSON METALLIQUE ETANCHE**
ELEKTRISCHE SCHALTZELLE MIT EINER METALLISCHEM KASTEN
ELECTRIC CELL WITH SEALED METAL CASING

(30) Priorité: 08.04.1997 FR 9704260
(43) Date de publication de la demande: 07.04.1999
(73) Titulaire: GEC ALSTHOM T & D SA, 75116 Paris (FR)
(72) Inventeur: STARCK, Thierry, F-34160 Castries (FR); BOUCHONNIER, Jean-Marc, F-34740 Vendargues (FR)
(74) Mandataire: Gosse, Michel
(86) Numéro de dépôt international: FR9800614
(87) Numéro de publication internationale: WO9845913

(56) Documents cités:
- DE-A- 3 436 173
- DE-A- 4 103 101
- DE-A- 19 511 736
- DE-A- 19 518 126
- DE-U- 29 501 081

## Description

L'invention concerne les cellules de distribution électrique de puissance, moyenne tension, ayant un caisson métallique dans lequel de l'appareillage électrique est installé, cet appareillage incluant au moins un disjoncteur et souvent un sectionneur, le caisson étant conçu étanche et couramment rempli d'un gaz diélectrique de protection et les liaisons électriques entre les conducteurs de liaison externes et l'appareillage logé dans le caisson s'effectuant par des traversées de courant étanches.

Un exemple de cellule moyenne tension, à caisson métallique étanche rempli d'un gaz de protection, est notamment fourni par le modèle d'utilité allemand G94201935. Cette cellule comporte un caisson dans et autour duquel divers éléments d'appareillage électrique sont placés. La disposition des éléments est réalisée de manière à obtenir une grande compacité et a permettre d'effectuer toutes les opérations d'exploitation en face avant de cellule.

Toutefois, cette cellule possède un caisson etanche soudé dont la fabrication est délicate, car ce caisson possède un décrochement inférieur prevu pour permettre le raccordement des câbles. De plus, les conducteurs de liaison entre les éléments disjoncteurs et les éléments sectionneurs ont des formes compliquées et des longueurs relativement importantes du fait des différences de position existant entre les éléments disjoncteurs prévus pour les différentes phases de distribution électrique, qui sont disposés en largeur dans le caisson, et les éléments sectionneurs qui sont disposés en profondeur.

Un autre exemple de cellule est fourni par la demande de brevet allemand 29501081.9. Ce document présente une variante à couplage longitudinal comportant un jeu de barres conductrices et une variante à couplage transversal comportant deux jeux de barres. Dans cette seconde variante, le positionnement côte à côte des éléments des deux sectionneurs avec un axe principal perpendiculaire à la face avant de la cellule implique la mise en oeuvre d'un caisson étanche différent de celui prévu pour la première variante. De plus, les différents conducteurs de liaison ont aussi des formes compliquées et des longueurs relativement grandes qui entraînent une dissipation inutile d'énergie par effet Joule.

L'invention propose donc une cellule moyenne tension à caisson métallique étanche plus simple de forme qui permet de loger les éléments d'appareillage électrique nécessaires à la réalisation de différentes variantes et notamment de cellules à couplage longitudinal ou transversal en un minimum de volume et avec des longueurs minimales de liaisons conductrices entre éléments.

La cellule électrique selon l'invention comporte un caisson métallique étanche contenant au moins un disjoncteur et un sectionneur triphasés de manière à assurer une interconnexion de barres conductrices externes et/ou de câbles électriques externes individuellement relié(e)s à l'intérieur du caisson au travers de traversées de courant étanches, le disjoncteur ayant des chambres de coupure disposées horizontalement et perpendiculairement à une face avant du caisson au travers de laquelle ce disjoncteur est commandé, le sectionneur a au moins deux positions est également commandé au travers de ladite face avant et comporte des couteaux mobiles articulés chacun sur une pièce porteuse, conductrice et fixe, portée par au moins un support isolant d'une chambre de coupure à un contact mobile de laquelle cette pièce est raccordée.

Selon une caractéristique de l'invention, le caisson parallélépipédique rectangle et optimalement cubique comporte un sectionneur dont les couteaux mobiles sont orientés au moins à peu prés verticalement dans une position, dite de service, pour laquelle ces couteaux sont en contact avec des plots conducteurs qui sont alignés horizontalement en parallèle à la face avant et qui sont situés au-dessus du sectionneur par rapport au disjoncteur au disjoncteur dans le caisson et qui sont reliés à des premières traversees de courant étanches portées par une face supérieure du caisson

Selon une caractéristique d'une variante de l'invention, la cellule comporte des premières traversees de courant disposées sur la face supérieure du caisson de manière telle qu'une première traversée de courant centrale soit directement au-dessus du plot et du couteau mobile centraux du sectionneur et que les deux autres premières traversées de courant soient diagonalement alignées par rapport a cette première traversée de courant centrale et soient respectivement reliées chacune à un plot différent par une première barre conductrice individuelle, ces barres, parallèles et disposées orthogonalement par rapport à la face avant, étant positionnées d'une manière symétrique vis-à-vis de la première traversée centrale dans le caisson

Selon une caractéristique d'une variante de l'invention, le caisson contient un sectionneur supplémentaire à couteaux mobiles articulés chacun sur une pièce conductrice fixe portée par des supports isolants d'une chambre de coupure à un contact de laquelle cette pièce conductrice est raccordée, ces couteaux mobiles étant orientés verticalement dans une position de service pour laquelle ils sont en contact avec des plots conducteurs, alignés horizontalement en parallèle à la face avant, situés au-dessus de ce sectionneur supplémentaire par rapport au disjoncteur dans le caisson et reliés à des secondes traversées de courant étanches portées par la face supérieure du caisson, ledit sectionneur supplémentaire étant situé derrière l'autre sectionneur par rapport à la face avant du caisson.

Selon une caractéristique d'une variante de l'invention, dans une position de mise à la terre, les dits couteaux mobiles, au moins approximativement orientés horizontalement, sont en contact chacun avec un plot de mise à la terre porté par une traverse de renfort horizontale disposée centralement entre des parois latérales du caisson au-dessus des chambres de coupure du disjoncteur.

Selon une caractéristique de l'invention, le caisson comporte un sectionneur dont, en position de sectionnement, les couteaux mobiles sont électriquement isolés des plots reliés aux premières traversées de courant et des plots de mise a la terre où ces couteaux sont basculés à mi-chemin entre les deux positions de service et de mise à la terre.

Selon une caractéristique d'une variante de l'invention, le caisson comporte des secondes traversées de courant disposées de telle sorte qu'une seconde traversée de courant, dite centrale, soit directement au-dessus du plot et du couteau mobile centraux du sectionneur supplémentaire; que les deux autres secondes traversées de courant soient diagonalement alignées par rapport à cette seconde traversée de courant centrale et soient respectivement reliées chacune à un plot différent par une seconde barre conductrice individuelle, ces deux secondes barres étant positionnées d'une manière symétrique par rapport à la traversée centrale correspondant au plot central du sectionneur supplémentaire dans le caisson.

Selon une caractéristique d'une variante de l'invention, le sectionneur et le sectionneur supplémentaire ont leurs éléments correspondants disposés à l'alignement et au même niveau horizontal dans le caisson de même que les premières et secondes barres de même phase.

Selon une caractéristique d'une variante de l'invention, le caisson est muni de tubes cintres unipolaires externes qui se raccordent chacun au caisson au niveau d'orifices ménagés dans la partie arrière de la paroi inférieure plane de ce caisson, qui assurent chacun le passage d'un élément conducteur différent, ce dernier pénétrant dans le caisson pour se connecter à une pièce conductrice fixe portée par au moins un support isolant d'une chambre de coupure au contact fixe de laquelle cette pièce est électriquement reliée et qui permettent chacun le raccordement d'au moins un câble électrique unipolaire par l'intermédiaire d'une traversée de courant étanche logée au niveau d'une extrémité du tube qui la contient et orientée horizontalement et vers l'avant du caisson sous lequel les tubes sont positionnés.

Selon une caractéristique d'une variante de l'invention, le caisson est muni de tubes unipolaires droits, externes, qui se raccordent chacun au caisson au niveau d'orifices ménagés dans la partie arriere de la paroi inférieure plane de ce caisson, en arrière de ceux prévus pour d'éventuels tubes unipolaires cintrés, qui assurent chacun le passage d'un élément conducteur différent pénétrant dans le caisson pour se connecter à une pièce conductrice fixe portée par au moins un support isolant d'une chambre de coupure au contact fixe de laquelle cette pièce est électriquement reliée et qui permettent notamment chacun le raccordement d'une phase d'un transformateur de tension externe.

Selon une caractéristique d'une variante de l'invention, le caisson comporte des secondes traversées de courant étanches portées par la face supérieure de ce caisson en arrière des premières traversées de courant dans une disposition identique à celle de celles-ci par rapport à cette la face avant, ces secondes traversées étant respectivement reliées chacune à une des premières traversées par une barre conductrice qui leur est commune et qui est logée à l'intérieur du caisson parallèlement à la face supérieure du caisson, ces barres étant parallèles entre elles.

Selon une caractéristique d'une variante de l'invention, la cellule comporte un caisson dans lequel le sectionneur et le sectionneur supplémentaires sont symétriquement disposés par rapport à un plan passant par les plots de mise à la terre, le sectionneur supplémentaire ayant des couteaux mobiles montés chacun sur une pièce porteuse conductrice fixée sur au moins un support isolant d'une chambre de coupure, les couteaux mobiles du sectionneur supplémentaire étant électriquement reliés chacun à un contact fixe d'une des chambres de coupure au contact mobile de laquelle est électriquement relié un couteau mobile du sectionneur logé dans le même caisson

Selon une caractéristique d'une variante de l'invention, le caisson comporte un sectionneur supplémentaire ayant des couteaux mobiles qui sont respectivement positionnés chacun avec le couteau mobile de même phase du sectionneur avec lequel il est logé dans le même caisson, sur des pièces porteuses, fixes et conductrices, qui sont fixées sur au moins un support isolant fixe de chambre de coupure et qui sont électriquement reliées entre elles par une liaison qui s'étend dans l'espace existant entre la chambre de coupure auquel le support isolant est affecté et la traverse que comporte le caisson.

Selon une caractéristique d'une variante de l'invention, la cellule comporte un caisson à sectionneur et sectionneur supplémentaire symétriquement disposés par rapport à un plan passant par les plots de mise à la terre, le sectionneur supplémentaire ayant des couteaux mobiles montés chacun sur une pièce porteuse conductrice fixe électriquement reliée à un contact fixe d'une des chambres de coupure par l'intermédiaire d'une pièce conductrice fixe, que porte au moins un support isolant de cette chambre de coupure, et de deux éléments conducteurs reliés à des traversées étanches et raccordés entre eux à l'extérieur du caisson par l'intermédiaire d'un conducteur isolé et cintré et de connecteurs permettant le montage de transformateurs de courant, de tension a l'extérieur du caisson, la pièce conductrice, un premier des élements conducteur, le conducteur isolé, un second des élements conducteurs et la pièce conductrice fixe relatifs à un couteau étant électriquement en série dans cet ordre.

Selon une caractéristique d'une variante de l'invention, la cellule comporte un caisson dans lequel le sectionneur supplémentaire a des couteaux mobiles qui sont respectivement positionnés chacun avec le couteau mobile de même phase du sectionneur avec lequel il est logé dans le même caisson, sur des pièces porteuses, conductrices, qui sont fixées sur au moins un support fixe et isolant de chambre de coupure et qui sont électriquement reliées entre elles par une liaison qui s'étend dans l'espace existant entre la chambre de coupure auquel le support isolant est affecté et la traverse que comporte le caisson.

Selon une autre caractéristique de variante de l'invention, le caisson comporte des traversées de courant portées par la face supérieure de ce caisson, prévues pour être raccordées à des lignes aériennes de distribution par l'intermédiaire de conducteurs de liaison unipolaires connectés aux parties externes respectives des traversées de courant, chaque conducteur étant muni d'un manchon élastomère isolant qui le recouvre en extrémité et qui s'emmanche sur la partie externe de la traversée de courant à laquelle est connecté ce conducteur.

Selon une caractéristique d'une variante de l'invention, le caisson comporte des traversées de courant prévues pour être raccordées à des lignes aériennes de distribution par l'intermédiaire de conducteurs de liaison unipolaires qui sont équipés de manchons élastomères isolants et autour lesquels sont montés des transformateurs de courant. de type torique

Selon une caractéristique d'une variante de l'invention, le caisson est rempli d'un gaz diélectrique de protection.

L'invention, ses caractéristiques et ses avantages sont précisés dans la description qui suit en liaison avec les figures évoquées ci-dessous

La figure 1 présente un schéma d'une cellule dite d'arrivée-départ selon l'invention vue latéralement et en coupe.

La figure 2 présente un schéma de principe partiel d'une variante de cellule d'arrivee-départ supposée vue de dessus et fictivement au travers de la face supérieure du caisson de cette cellule.

La figure 3 présente un schéma en coupe latérale de la variante de cellule présentée en figure 2.

La figure 4 présente un schéma électrique d'une cellule dite de couplage selon la figure 3.

La figure 5 présente un schéma d'une cellule d'arrivée-départ à décalage de barres, selon l'invention, vue latéralement et en coupe

La figure 6 présente un schéma de principe montrant les raccordements du jeu de barres entre deux cellules d'arrivée-départ par l'intermédiaire d'une cellule de couplage longitudinal.

La figure 7 présente un schéma d'une variante de cellule de couplage longitudinal dotée de transformateurs de mesure, externes, accessibles alors que les barres sont sous tension.

La figure 8 présente un schéma électrique de la variante de cellule de couplage selon la figure 7.

La figure 9 présente un schéma d'une variante de cellule à double jeu de barres.

La figure 10 présente un schéma électrique de la variante de cellule à double jeu de barres selon la figure 9.

La figure 11 présente un schéma d'une variante d'agencement de cellule pour usage extérieur à traversées de courant raccordables à des lignes aériennes.

La figure 12 présente une vue de dessus d'une cellule selon la figure 11.

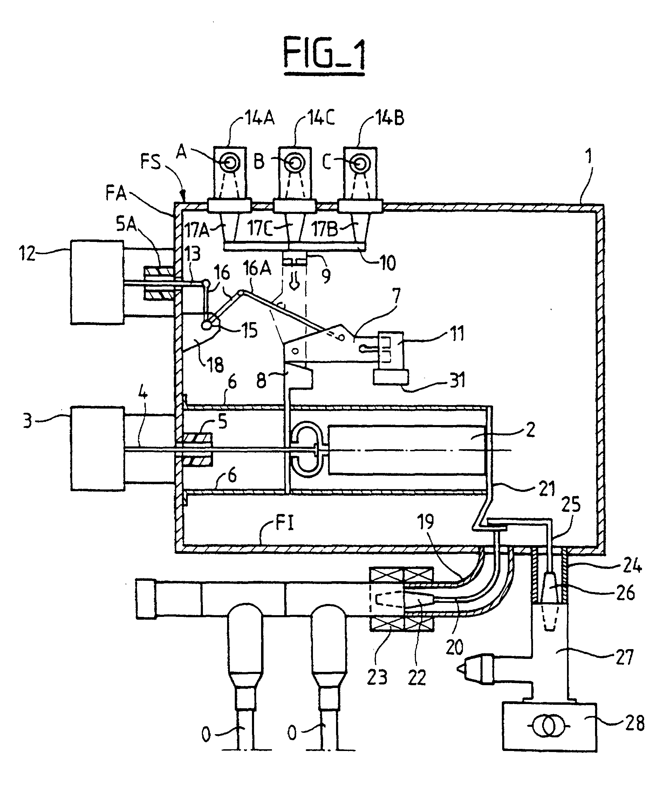

L'exemple de cellule d'arrivée-départ triphasée présenté sur la figure 1 comporte un caisson 1 de forme parallélépipédique rectangle, optimalement cubique, réalisé de manière connue de l'homme de métier pour être étanche.

Ce caisson 1, ici supposé en tôle métallique, est prévu pour contenir divers éléments d'appareillage électrique dont notamment les éléments d'au moins un disjoncteur ayant trois pôles dont les axes respectifs sont orientés perpendiculairement à une des parois du caisson destinee à constituer la face avant de la cellule, cette paroi étant ici référencée FA.

Les pôles sont disposés côte à côte dans un plan horizontal, ils sont ici supposés alignés derrière celui qui est symbolisé par une de ses trois chambres de coupure 2. Ces chambres sont par exemple de type chambre de coupure sous vide ou chambre remplie d'un gaz diélectrique de protection, tel que du SF6.

Un mécanisme de manoeuvre 3 du disjoncteur est positionné en avant du caisson Il comporte au moins une bielle de manoeuvre 4 qui passe au travers de la face avant FA par un dispositif de traversée étanche 5 et qui commande les chambres de coupure 2. Ces dernières sont portées par des supports isolants 6 qui sont fixés à l'intérieur du caisson 1 sur la paroi constituant la face avant FA

Le caisson 1 est aussi prévu pour pouvoir contenir les éléments d'au moins un sectionneur ici supposé à trois positions qui prend place au-dessus des pôles du disjoncteur. Ce sectionneur comporte trois paires de couteaux de contact mobiles 7 qui sont directement articulés chacun sur une pièce porteuse 8, conductrice et fixe, montée sur les supports isolants 6 d'une chambre de coupure 2 au contact mobile de laquelle cette pièce 8 est électriquement raccordée. Un seul des couteaux est ici représenté

Dans une position, dite de service, les trois couteaux mobiles 7 sont en contact avec trois plots conducteurs 9 que portent des barres conductrices 10 disposées sous la paroi constituant la face supérieure FS de la cellule. Ces barres 10 sont ici rectilignes et s'étendent perpendiculairement à la face avant FA du caisson. Elles sont positionnées au-dessus du sectionneur par rapport au disjoncteur dans ce caisson. Les couteaux sont par exemple orientés verticalement, comme représenté en pointillé.

Dans une position, dite de sectionnement, les couteaux mobiles 7 sont éloignés des plots 9 de sorte que des distances de sectionnement suffisantes entre couteaux et plots 9 soient respectées. Dans cette position, les couteaux sont par exemple basculés à mi-chemin entre la position évoquée ci-dessus et celle qui est décrite ci-dessous.

Dans cette position, dite de mise à la terre, les couteaux mobiles 7 sont en contact avec trois plots conducteurs 11 qui sont reliés à un collecteur de terre du caisson, un seul de ces plots étant représenté. Chaque couteau mobile est par exemple orienté au moins à peu pres horizontalement, comme représenté en trait plein.

Comme connu, les couteaux mobiles 7 sont actionnés par un mécanisme de commande 12 extérieur au caisson 1. Une tige de manoeuvre 13 du mécanisme de commande passe au travers de la face avant FA par un dispositif de traversée étanche 5A identique ou similaire au dispositif de traversée étanche 5 évoque plus haut. Cette tige agit sur un mécanisme comportant un arbre 15, des leviers 16 et des bielles isolantes 16A. La tige de manoeuvre 13 agit sur un levier qui fait partiellement tourner l'arbre 15. Ce dernier entraîne trois leviers qui commandent individuellement le passage des couteaux mobiles 7 d'une position à l'autre par l'intermédiaire des bielles isolantes.

Dans l'exemple présenté, l'arbre 15 est porté par des paliers 18 fixés sur la paroi de la face avant FA à l'intérieur du caisson 1. Un seul des paliers 18 est ici représenté

Dans une forme préférée de réalisation, les plots 11 de mise à la terre sont portés par un même support qui est par exemple une traverse métallique 31 positionnée en partie centrale du caisson, entre les deux parois latérales de ce dernier, cette traverse servant aussi de renfort et permettant d'améliorer la tenue en pression ou éventuellement dépression de la cellule

Les barres conductrices 10 sont destinées à être reliées a des conducteurs triphasés externes A, B, C situés à l'extérieur du caisson par l'intermédiaire de traversées de courant 17A, 17B, 17C que porte la paroi constituant la face supérieure FS de ce caisson. Chaque traversée de courant porte une barre 10 qu'elle est ici supposee relier à un conducteur externe, par exemple par un connecteur 14A, 14B ou 14C. Ce conducteur externe est par exemple une des barres conductrices d'un jeu triphasé de barres situé a l'extérieur et au-dessus du caisson.

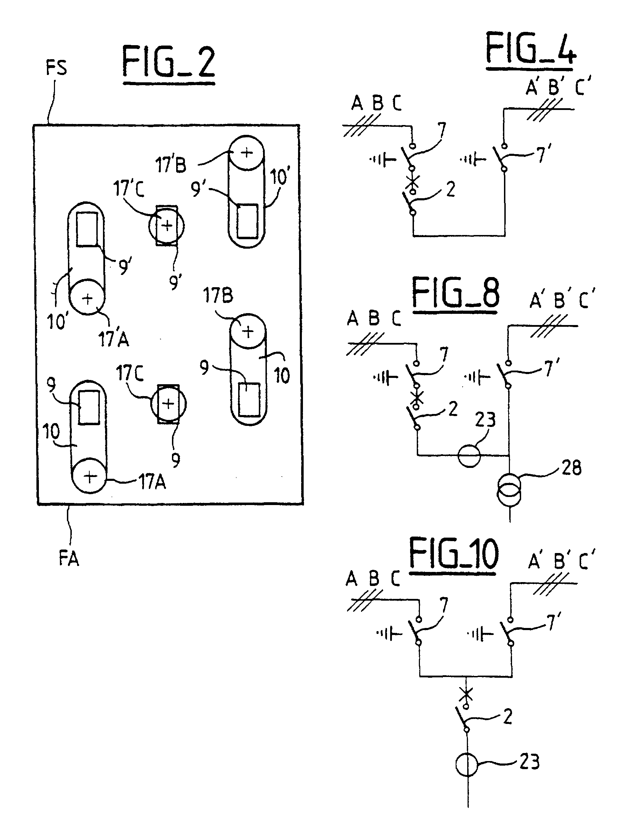

Dans l'exemple de réalisation proposé et ainsi que le montre la figure 2, les trois traversées de courant 17A, 17B, 17C portées par le caisson 1 sont disposées en diagonale, par rapport à la face avant FA sur la face supérieure FS d'allure rectangulaire et préférablement carrée de ce caisson, de manière que la traversée de courant de la phase centrale référencée 17C soit directement au-dessus du plot 9 correspondant ainsi que du couteau mobile 7 correspondant, lorsque ce dernier est en position de service, ainsi que le montre la figure 1. Les deux autres traversées de courant 17A, 17B, diagonalement alignées de part et d'autre de la traversée de courant de phase centrale 17C, sont alors reliées aux plots 9 qui leur correspondent. Les liaisons correspondantes sont assurées par les barres conductrices 10 qui sont identiques et positionnées d'une manière symétrique par rapport à la traversée de phase centrale 17C et au plot 9 correspondant dans le caisson 1

Dans une forme préférée de réalisation, l'ensemble formé par les éléments fonctionnels contenus dans le caisson 1 entre sectionneur et traversées de courant, tels que décrits jusqu'ici, est logé dans la partie supérieure avant du caisson, cette partie correspondant approximativement au quart de ce caisson

Par ailleurs et ainsi que le montre la figure 1, des tubes cintrés unipolaires externes 19, dont un seul est représenté sur la figure 1, viennent se raccorder chacun par une première extrémité au niveau d'orifices ménagés dans la partie arrière de la paroi inférieure plane FI du caisson 1. Ces tubes permettent chacun le passage d'un élément conducteur cintré 20, différent, pénétrant dans le caisson pour se connecter à une pièce conductrice fixe 21 portée par les supports isolants 6 d'une chambre de coupure 2 au contact fixe de laquelle cette piece 21 est électriquement reliée.

La seconde extrémité des tubes unipolaires 19 est reliée à une traversée de courant étanche 22 ici supposée a axe horizontal Chaque traversée étanche 22 est ici prévue pour permettre un raccordement par l'avant d'un ou de plusieurs câbles électriques unipolaires 0 par phase, ce raccordement s'effectuant au moyen de connecteurs connus en eux-mêmes

Les secondes extrémités des tubes unipolaires 19 comportent éventuellement une portion ici prévue horizontale permettant de recevoir des transformateurs de courant 23, externes et de type torique.

Par ailleurs dans une variante de réalisation également proposée sur la figure 1, des tubes unipolaires externes 24 sont susceptibles de venir se raccorder chacun par une première extrémité au niveau d'orifices ménagés dans la paroi inférieure plane FI du caisson 1 en arrière de ceux ménagés pour les tubes unipolaires externes 19 si ceux-ci sont prévus Ces tubes 24 qui sont ici supposés droits permettent chacun le passage d'un élément conducteur 25 différent qui pénètre dans le caisson pour se connecter à une pièce conductrice fixe 21 d'une des chambres de coupure 2 La seconde extrémité de chacun des tubes unipolaires 24 est munie d'une traversée de courant étanche 26 ici montrée verticale. Chaque traversée étanche 26 est ici supposée prévue pour permettre un raccordement d'au moins un élément de raccordement 27 en T prévu pour le raccordement d'un transformateur de tension externe 28.

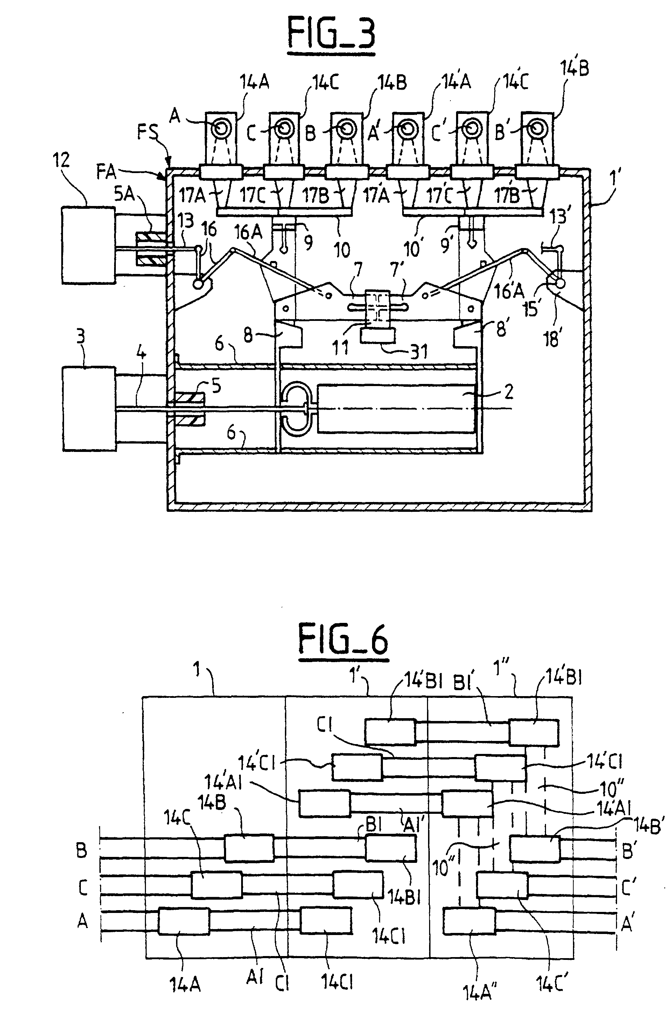

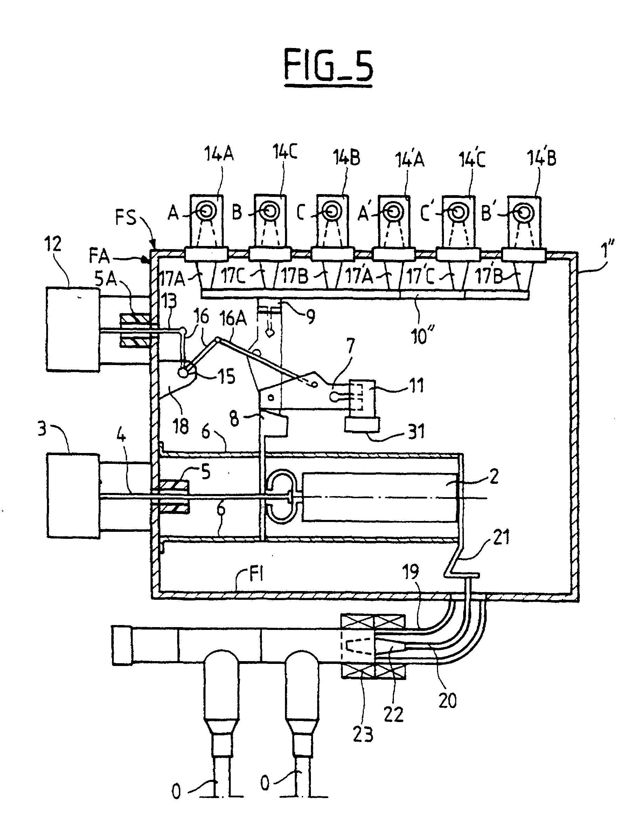

Un exemple de cellule de couplage développée à partir d'une cellule telle qu'évoquée ci-dessus et comportant un sectionneur supplémentaire est présente en figure 3, il permet par exemple de réaliser un agencement selon un schéma électrique présenté sur la figure 4.

Un tel agencement permet de réaliser un couplage longitudinal entre un jeu de conducteurs externes triphasés A, B, C connectés aux traversées de courant 17A, 17B, 17C et un jeu de conducteurs externes triphasés A', B', C' connectés à des traversées de courant 17'A, 17'B et 17'C disposées en arrière des précédentes en face supérieure du caisson 1'. Le couplage s'effectue ici par l'intermédiaire d'une succession d'éléments comportant un sectionneur à couteaux mobiles 7 et un disjoncteur à chambres de coupure 2, l'un et l'autre analogues à ceux prévus sur la figure 1, ainsi que d'un sectionneur supplémentaire à couteaux mobiles 7'. Dans la pratique, ce sectionneur supplémentaire a ses couteaux mobiles 7' respectivement positionnés chacun entre un contact fixe d'une des chambres de coupure 2 et une des barres conductrices 10' ainsi que le montre la figure 3.

Selon une forme préférée de réalisation présentée sur la figure 3, le sectionneur supplémentaire qui est inclus dans le caisson 1' d'une cellule analogue à celle précédemment détaillée est aussi un sectionneur à trois positions qui est identique au sectionneur à couteaux mobiles 7 Ces deux sectionneurs sont symétriquement disposés par rapport à un plan vertical, non représenté et supposé passant par les plots 11 de mise à la terre, ce plan étant parallèle à la face avant FA du caisson.

Les couteaux mobiles 7' du sectionneur supplémentaire sont articulés chacun sur une pièce porteuse 8', fixe et conductrice, elle-même portée par les supports isolants 6 d'une des chambres de coupure 2 au contact fixe de laquelle cette pièce porteuse 8', est électriquement raccordée dans le caisson.

En position de service, les trois couteaux mobiles 7' sont en contact avec trois plots conducteurs 9' que portent des barres conductrices 10' situées au-dessus du sectionneur supplémentaire dans le caisson Ces couteaux sont par exemple orientés verticalement, comme représenté en pointillé.

En position de mise à la terre, les couteaux mobiles 7' sont en contact chacun avec un plot relié au collecteur de terre du caisson Dans la réalisation présentée, ou les sectionneurs sont symétriquement installés par rapport à un plan vertical médian du caisson qui est supposé parallèle à la paroi constituant la face avant FA, les plots reliés à la terre sont les plots 11 qui peuvent simultanément recevoir les couteaux 7 et 7' des deux sectionneurs.

Chaque couteau mobile est par exemple orienté au moins à peu près horizontalement, comme représenté en trait plein.

En position de sectionnement, les couteaux mobiles 7' sont par exemple basculés à mi-chemin entre les deux positions évoquées ci-dessus

Le sectionneur supplémentaire comporte un mécanisme de commande propre qui est extérieur au caisson 1' de même que le mécanisme de commande 12 à côté duquel il est situé en avant dudit caisson. Ce mécanisme comporte une tige de manoeuvre 13', partiellement représentée, qui passe au travers de la face avant FA par un dispositif de traversée étanche identique ou similaire au dispositif de traversée étanche 5 évoqué plus haut, de manière à longer un des parois latérales du caisson et à s'articuler sur un des leviers 16' d'un mécanisme de transmission de mouvement par leviers 16' et bielles isolantes 16'A analogue au mécanisme à leviers 16 et bielles 16A. Les leviers 16' sont portés par un arbre rotatif 15' et trois d'entre eux sont reliés aux couteaux 9' par l'intermédiaire de trois bielles isolantes 16'A, pour assurer les déplacements des couteaux mobiles 7 entre les positions évoquées ci-dessus. L'arbre 15' est porté par des paliers 18' fixés sur la paroi qui est à l'opposé de la face avant FA dans le caisson.

Les barres conductrices 10' sont destinées à être reliées à des conducteurs, situés à l'èxtérieur du caisson, par l'intermédiaire des traversées de courant 17'A, 17'B, 17C' portées par la paroi constituant la face supérieure FS de ce caisson. Chaque traversée de courant 17'A, 17'B, 17'C permet de relier une barre conductrice 10' située à l'intérieur du caisson à un conducteur de liaison externe différent A', B' ou C' situé à l'extérieur et au-dessus dudit caisson.

Dans l'exemple présenté en figure 3 des connecteurs 14'A, 14'B et 14'C sont prévus pour assurer ces liaisons et pour permettre leur éventuelle déconnexion.

Comme montré sur la figure 2, les trois traversées de courant 17'A, 17'B, 17'C sont prévues disposées en diagonale sur la face supérieure FS de ce caisson, de même que les traversées 17A, 17B, 17C. La traversée de courant 17'C de la phase centrale est positionnée directement au-dessus du plot 9' correspondant ainsi que du couteau mobile 7' correspondant, lorsque ce dernier est en position de service. Les deux autres traversées de courant diagonalement alignées de part et d'autre de la traversée de courant de phase centrale sont alors reliées aux plots 9' qui leur correspondent Les liaisons correspondantes sont assurées par les barres 10' positionnées de manière symétrique par rapport au plan vertical qui passe par les traversées de phase centrale 17C et 17'C et les plot 9 et 9' et qui est perpendiculaire au plan que définit la face avant FA.

Dans une forme préférée de réalisation, l'ensemble formé par les éléments fonctionnels contenus dans le caisson 1 entre sectionneur supplémentaire et traversées de courant 17'A, 17'B, 17'C, tels que décrits jusqu'ici, est logé dans la partie supérieure arrière du caisson, cette partie correspondant au moins approximativement elle aussi à un quart de ce caisson. Il est à noter que dans cet exemple de réalisation les liaisons électriques entre barres conductrices externes via les sectionneurs et le disjoncteur sont susceptibles d'être particulièrement courtes.

Une variante de cellule d'arrivée-départ à caisson 1" est présentée en figure 5 elle est st développée à partir d'une cellule d'arrivée-départ à caisson 1 présentée en figure 1. Toutefois, elle s'en différencie dans la mesure où elle comporte trois traversées de courant supplémentaires en plus des trois traversées de courant 17A, 17B, 17C disposées en diagonale, par rapport à la face avant FA du caisson. Les trois traversées de courant supplémentaires 17'A, 17'B et 17'C sont disposées en arrière des précédentes en face supérieure du caisson 1", comme celles d'une cellule à caisson 1' telle que montrée en figure 3

La liaison entre deux traversées de courant relatives à une même phase, telles 17A et 17A', est assurée par une barre conductrice rectiligne, dite de décalage, 10" fixée aux deux traversées de courant à l'intérieur du caisson 1", les trois barres de décalage 10" étant identiques et parallèles entre elles à proximité de la face supérieure FS

Dans l'exemple présenté sur la figure 5, des tubes cintrés unipolaires externes 19 viennent se raccorder au niveau d'orifices ménagés dans la partie arrière de la paroi inférieure plane FI du caisson 1d'une manière analogue à celle prévue au niveau de la cellule présentée en figure 1.

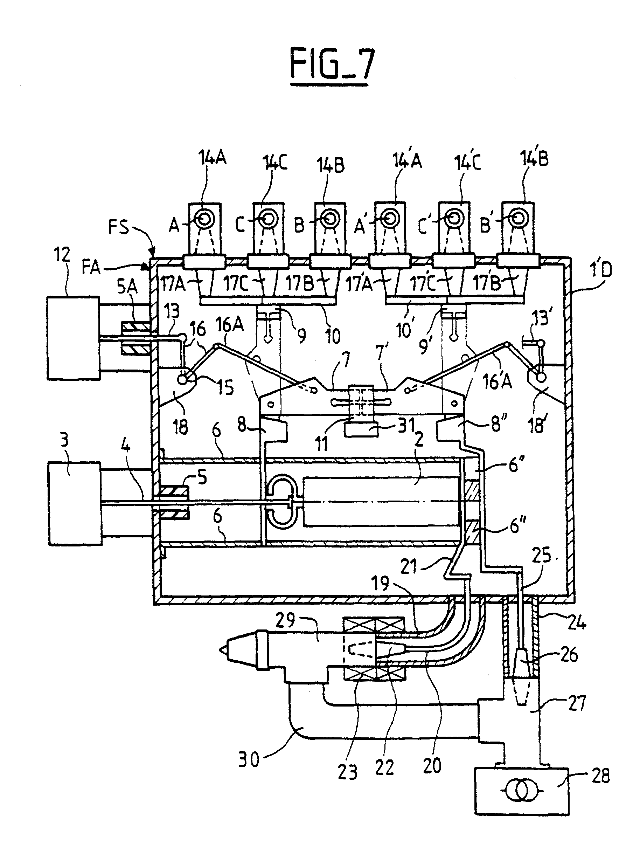

La figure 6 montre un exemple de raccordement entre deux cellules d'arrivée-départ à caissons 1 et 1" par l'intermédiaire d'une cellule de couplage à caisson l'alignée entre elles.

La cellule d'arrivée-départ à caisson 1 est supposée identique à celle présentée en figure 1.

La cellule de couplage à caisson 1' est supposée identique à celle présentée en figure 3

La cellule d'arrivée-départ à caisson 1" est supposée identique à celle présentée en figure 5

Comme le montre la figure 6, les caissons d'arrivée-départ 1 et 1" reçoivent chacun un jeu différent de conducteurs externes triphasés référencés A, B, C pour l'un et A', B', C' pour l'autre. Dans la réalisation proposée, les conducteurs des deux jeux sont parallèles entre eux et à la face avant des caissons dans chaque jeu et alignés deux à deux d'un jeu à l'autre. Ils sont de plus respectivement reliés aux traversées de courant 17A, 17B, 17C situés à proximité de la face avant du caisson où ils aboutissent.

Dans l'exemple présenté cette liaison entre un conducteur externe triphasé et une traversée de courant est supposée réalisée par un connecteur, tels les connecteurs en croix référencés 14A, 14B; 14C pour les conducteurs A, B, C aboutissant au caisson 1.

Les caissons 1, 1" des cellules d'arrivée-départ sont respectivement reliés au caisson 1' de la cellule de couplage par des barres conductrices intermédiaires qui sont préférablement identiques, ces barres isolées et externes étant référencées AI, BI, CI entre caissons 1 et 1' et AI', BI, CI' entre caissons 1' et 1". Des connecteurs assurent la connexion des barres intermédiaires aux traversées de courant qu'elles unissent, tels les connecteurs réferencés 14A1, 14B1, 14C1 au niveau du caisson 1' pour les barres intermédiaires AI, BI, CI reliant ce caisson au caisson 1.

La fonction de couplage d'un jeu de conducteurs externes triphasés est ainsi réalisée à l'aide d'une seule cellule de couplage composée à l'aide d'éléments standardisés, tels que le disjoncteur, les sectionneurs et les barres

La cellule d'arrivée-départ à caisson 1" remplit la même fonction qu'une cellule d'arrivée départ 1, c'est-à-dire qu'elle permet l'alimentation d'un départ par câbles à partir d'un jeu de conducteurs externes par l'intermédiaire d'un disjoncteur et d'un sectionneur. Elle permet de plus de compenser simplement à l'aide de barres 10" le décalage entre traversées de courant de même phase qu'introduit le caisson de la cellule de couplage 1'.

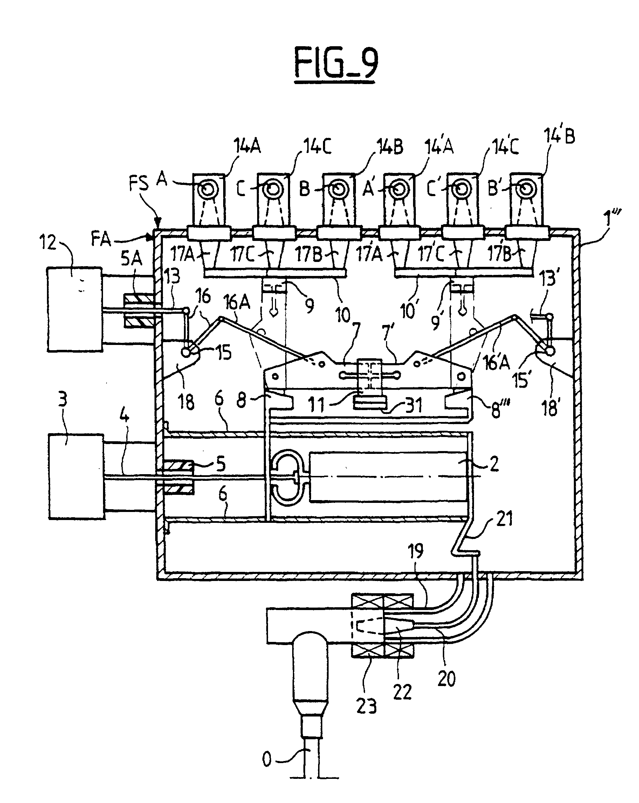

Un autre exemple de caisson de cellule de couplage l'D est présenté en figure 7, il permet de réaliser un agencement selon un schéma électrique tel que montré sur la figure 8. Cette cellule est développée à partir d'une cellule de couplage à caisson 1' telle qu'évoquée plus haut, elle est dotée d'une liaison conductrice externe permettant de relier les contacts fixes des chambres de coupure 2 aux pièces porteuses conductrices 8" des couteaux mobiles 7' du sectionneur supplémentaire. Cette liaison externe est ici équipée de transformateurs de courant 23 et de tension 28, externes au caisson.

Ces transformateurs sont susceptibles d'être atteints et notamment démontés, si besoin est, lorsque des barres de la cellule sont sous tension.

Le couplage y est realise par l'intermédiaire d'un sectionneur a couteaux mobiles 7, d'un disjoncteur à chambres de coupure 2 et d'un sectionneur à couteaux mobiles 7'

Les couteaux mobiles 7' du sectionneur supplémentaire sont ici articulés chacun sur une pièce porteuse conductrice 8", dite auxiliaire, légèrement différente des pièces porteuses 8, 8'. Cette pièce porteuse auxiliaire 8" est ici fixée sur des supports isolants supplémentaires 6" portés par une pièce conductrice fixe 21, identique à celle prévue dans la cellule présentée en figure 1.

La pièce 21 est fixée sur les supports isolants 6 du contact fixe d'une chambre de coupure 2 de manière identique. Chaque pièce porteuse auxiliaire 8" est reliée à un élément conducteur 25.

Des tubes cintrés unipolaires externes 19, analogues à celui représenté sur la figure 1, viennent se raccorder chacun par une première extrémite au niveau d'orifices ménagés dans la partie arrière de la paroi inférieure plane du caisson 1'D Ces tubes contiennent chacun un élément conducteur cintre 20, qui pénètre dans le caisson pour se connecter par une première extrémité à une pièce conductrice fixe 21 reliée au contact fixe d'une chambre de coupure 2, comme précédemment.

Une seconde extrémité de chaque tube cintré unipolaire 24 est munie d'une traversée étanche 22 qui reçoit un connecteur 29 en T, de type connu

Une barre conductrice 30, gainée d'isolant et montée extérieurement au caisson, permet de relier chaque élément conducteur 20 à celui des éléments conducteurs 25 qui correspond à la même phase dans le caisson. Chaque barre conductrice 30 est ici reliée à deux traversées de courant 20 et 26 relatives à une même phase par deux connecteurs 27 et 29, par exemple au niveau des prises médianes de ces derniers.

Dans la réalisation proposée, les connecteurs 27 sont positionnés verticalement avec leurs prises médianes respectives orientées vers l'avant et les connecteurs 29 sont positionnés horizontalement avec leurs prises médianes respectives orientées vers le bas et les barres conductrices 30, qui sont coudées, sont montées chacune entre les prises médianes respectives de deux connecteurs 27, 29 relatifs à une même phase.

Des transformateurs de courant 23 et des transformateurs de tension 28 sont associés aux différents éléments conducteurs 20 et 25, de la même manière que dans le cas de la cellule à caisson 1 présentée en figure 1. Ils permettent respectivement une mesure du courant passant par les barres conductrices 30 et de la tension au niveau de ces barres.

A partir du moment où les deux sectionneurs contenus dans le caisson d'une cellule telle que présentée sur la figure 7 sont simultanément en position de mise à la terre, il est possible d'accéder aux transformateurs 23 et 28 associés a ce caisson, alors que les barres conductrices externes A, B, C et/ou A', B', C' auxquelles la cellule est reliée sont sous tension Il est en particulier possible de démonter les transformateurs de courant 23, après déconnexion barres conductrices 30 et des connecteurs 29.

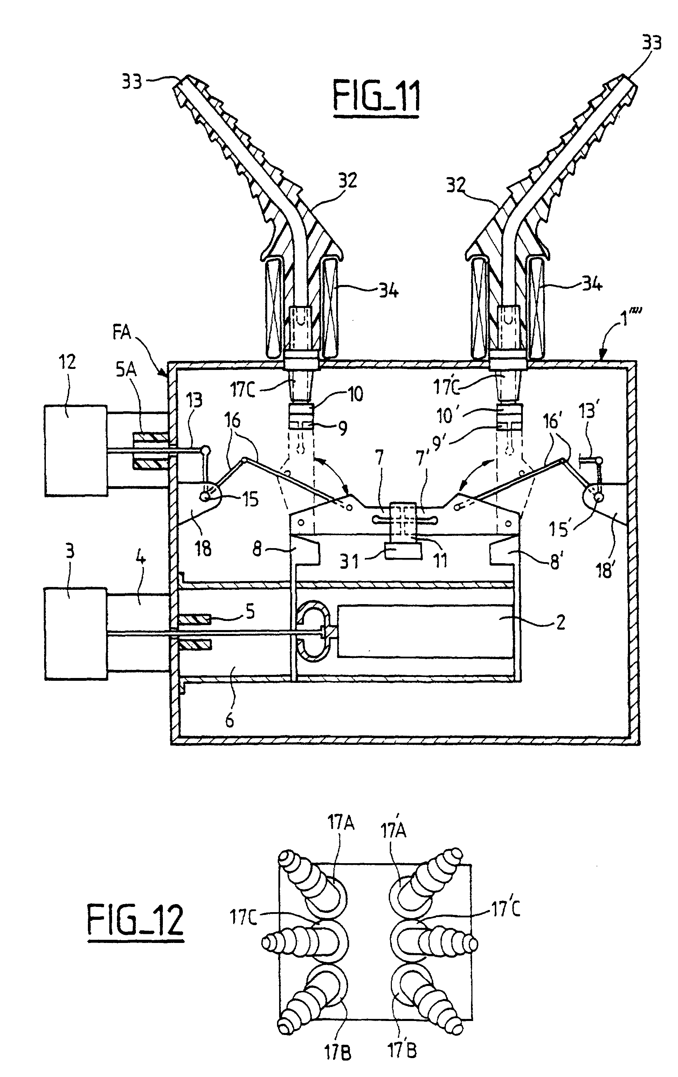

Une variante supplémentaire de cellule à double jeu de barres est présentée en figure 9, elle permet de réaliser un agencement selon le schéma électrique présenté sur la figure 10.

Ce schéma montre un exemple de caisson 1"' de cellule destinée à permettre l'alimentation d'un départ par câbles à partir de deux jeux de conducteurs externes triphasés A, B, C et A', B', C', ici deux jeux de barres, ce caisson comportant un disjoncteur et deux sectionneurs 7 et 7' comme les caissons 1' et 1'D

L'agencement du caisson 1"' présenté en figure 9 diffère des précédents en ce que le sectionneur à couteaux mobiles 7 et le sectionneur à couteaux mobiles 7' ont leurs couteaux de même phase articulés sur des pièces porteuses 8 et 8"' qui sont fixées sur les supports isolants 6 et qui sont électriquement interconnectées deux à deux, comme montré sur la figure 9 pour les deux pièces 8 et 8"' visibles sur cette figure. La liaison établie entre deux pièces 8 et 8"' reliées au contact mobile d'une des chambres de coupure 2 de disjoncteur comporte ici une partie allongée qui s'étend ici parallèlement à cette chambre entre l'espace existant entre cette dernière et la traverse de renfort 31 que comporte le caisson.

Les liaisons entre le contact fixe de chaque chambre de coupure 2 et les câbles électriques externes 0 s'effectue de la même manière que dans la réalisation présentée en figure 1

La cellule à double jeu de barres évoquée ci-dessus a pour important avantage de mettre en oeuvre des composants déjà exploités avec les cellules 1 et 1".

L'agencement de cellule présenté en figure 11 est plus spécifiquement adapté au cas où la cellule, de type "dead tank", selon l'invention est destinée à être exploitée en extérieur en liaison avec des lignes aériennes auxquelles se raccordent au moins certaines des traversées de courant de la cellule.

La cellule elle-même est analogue à celle présentée en figure 3 mis en part en le fait que les traversées de courant du caisson 1"" qu'elle comporte y sont éventuellement alignées parallèlement à la face avant FA en un ou ici deux rangs de trois traversées comme on le voit sur la figure 12 pour les traversées respectivement référencées 17A à 17C et 17A' à 17C'. Dans ce cas, les plots conducteurs 9 et éventuellement 9' que comportent le ou les sectionneurs y sont donc situés directement chacun sous une traversée à laquelle ce plot est électriquement relié par une pièce de dimensions limitées correspondant fonctionnellement à une des barres 10 ou 10' des réalisations préalablement décrites Un manchon en matériau élastomère isolant 32 recouvre un conducteur de liaison unipolaire 33 de raccordement à un des fils de phase d'une liaison aérienne qui vient se raccorder au caisson 1"" au niveau d'une des traversees de courant, telle 17C, portée par la face supérieure FS du caisson. Ce manchon s'emmanche sur la partie externe de cette traversée de courant, il est dimensionné de manière connue en soi de manière à permettre d'obtenir les distances diélectriques nécessaires entre conducteurs de phase et entre conducteurs de phase et de terre. Il comporte des ailettes de manière à augmenter la longueur de ligne de fuite.

Les conducteurs de liaison unipolaires sont cintrés de manière connue en soi de manière à augmenter les distances diélectriques à l'extrémité des traversées Dans une forme préférée de réalisation, les manchons isolants 32 comportent chacun une partie cylindrique recouverte d'une couche conductrice mise à la terre permettant à chacun de venir chapeauter et protéger un ou plusieurs transformateur(s) de courant 34, de type torique, entourant le conducteur unipolaire 33 qui traverse le manchon considéré, ce ou ces transformateur(s) étant positionné(s) au niveau de la partie externe de la traversée de courant concernée, par exemple sur une partie cylindrique du manchon emmanchée sur cette partie externe de traversée et sous une seconde partie du manchon. La couche conductrice que comporte chaque manchon se termine de manière évasée ou en arc de cercle au niveau de la seconde partie, au-dessus des traversées, de manière à réduire le champ électrique en extrémité de couche conductrice

L'utilisation d'un caisson tel que 1"", selon l'invention, permet de réaliser des cellules moyenne tension, isolées au gaz pour usage extérieur et raccordement à des lignes aériennes de distribution, qui comportent un disjoncteur, un ou des sectionneurs et une partie des éléments électriques de liaison indispensables logés dans un contenant de relativement faible volume par rapport aux agencements de cellule connus et ce avec des éléments constitutifs standardisés dont au moins certains sont communs à diverses variantes de cellules selon l'invention. Dans la mesure où les sectionneurs électriquement situés de part et d'autre du disjoncteur sont prévus du type à trois positions comme indiqué plus haut, il est possible de mettre à la terre ou et en court-circuit l'une et /ou l'autre des lignes aériennes amont et aval reliées à l'un ou l'autre de ces sectionneurs.

Une mise à la terre s'effectue par exemple avec un sectionneur dont les couteaux sont en position de mise en service et donc reliés aux traversées de courant, telles 17A, 17B, 17C, desservant la ligne à mettre en court-circuit par mise en position de mise à la terre des couteaux du second sectionneur et par fermeture du disjoncteur en mettant à profit le pouvoir de fermeture sur court-circuit propre à ce dernier. L'opération peut bien entendu être réalisée de manière équivalente par inversion des positionnements des sectionneurs dans le cas où la ligne est desservie par les traversées de courant 17'A, 17'B, 17'C.

Lorsque les sectionneurs sont en position de sectionnement, il est possible d'effectuer des vérifications sur le disjoncteur, alors que les lignes aériennes sont sous tension. Il en découle une grande facilité d'intervention et une grande sécurité d'exploitation pour l'opérateur.

Il est bien entendu prévu de surélever le caisson 1"" au moyen d'un châssis de support, non représenté, de façon à respecter la hauteur minimale prévue pour les éléments sous tension de telles installations moyenne tension.

Il est prévu par ailleurs de réaliser des caissons analogues au caisson 1"" où le disjoncteur est directement relié aux traversées de courant, en l'absence de sectionneur dans le caisson. Les éléments de liaison nécessaires à un tel agencement ne sont pas représentés ici, ce sont par exemple des barres conductrices reliant chacun des contacts mobiles ou fixes des chambres de coupure de phases du disjoncteur chacune à une partie interne d'une des traversées de courant portées par la paroi constituant la face supérieure FS du caisson.

Il est également prévu d'équiper la paroi basse d'un caisson 1"" de la même manière que la partie basse d'un des caissons 1, 1" ou 1"' respectivement présentés sur les figures 1, 7 et 9, de manière à permettre le raccordement de transformateurs de courant toriques ou de tension et de câbles unipolaires externes par l'intermédiaire de connecteurs et de prises appropriés. Ceci ne sera pas développé plus avant ici, dans la mesure où de tels équipements sont réalisables comme indiqué précédemment en liaison avec les figures rappelées ci-dessus.

Selon une variante non représentée de cellule, du type "dead tank", telle que définie ci-dessus, les traversées de courant étanches 17 sont fixées à l'une des extrémités de tubes métalliques inclinés fixés par une autre extrémité au caisson au niveau des orifices ménagés dans la face supérieure FS pour ces traversées de courant. La différence d'orientation entre tubes est alors choisie pour que la nécessaire distance diélectrique entre extrémités des manchons isolants dont sont respectivement équipés les traversées soit respectee.

Ces manchons sont alors susceptibles d'être des manchons droits plus simples et moins coûteux que ceux présentés sur la figure 11. De plus il est alors possible de monter les transformateurs de courant, de type torique, directement autour des tubes métalliques inclinés, ce qui simplifie aussi la réalisation et le montage

## Revendications

1. Cellule électrique à caisson métallique étanche, contenant au moins un disjoncteur et un sectionneur triphasés, pour interconnexion de barres conductrices externes et/ou de câbles électriques externes individuellement relie(e)s à l'intérieur du caisson au travers de traversées de courant etanches, le disjoncteur ayant des chambres de coupure (2) disposées horizontalement et perpendiculairement à une face avant (FA) du caisson au travers de laquelle ce disjoncteur est commandé de même que le sectionneur, ce dernier comportant des couteaux mobiles (7) entre au moins une position dite de service et une position dite de sectionnement et articulés chacun sur une pièce porteuse (8), conductrice et fixe, portée par au moins un support isolant (6) d'une chambre de coupure a un contact mobile de laquelle cette pièce est raccordée, **caractérise en ce que** le caisson parallélépipédique rectangle et optimalement cubique comporte un sectionneur dont les couteaux mobiles sont orientés au moins a peu près verticalement en position de service, pour laquelle ces couteaux sont en contact avec des plots conducteurs (9) qui sont alignés horizontalement en parallèle à la face avant, qui sont situés au-dessus du sectionneur par rapport au disjoncteur dans le caisson et qui sont reliés à des premières traversées de courant étanches (17A, 17B, 17C) portées par une face supérieure (FS) du caisson.

2. Cellule selon la revendication 1, **caractérisée en ce qu'**elle comporte des premières traversées de courant disposées sur la face supérieure du caisson de manière telle qu'une premiere traversée de courant centrale (17C) soit directement au-dessus du plot et du couteau mobile centraux du sectionneur et **en ce que** les deux autres premières traversées de courant soient diagonalement alignées par rapport à cette première traversée de courant centrale et soient respectivement reliées chacune à un plot différent par une première barre conductrice (10) individuelle, ces barres, parallèles et disposées orthogonalement par rapport à la face avant, étant positionnées d'une manière symétrique vis-à-vis de la première traversée centrale dans le caisson

3. Cellule, selon l'une des revendications 1, 2, **caractérisée en ce qu'**elle comporte un caisson contenant un sectionneur supplémentaire à couteaux mobiles (7') articulés eux aussi chacun sur une pièce conductrice fixe (8', 8" ou 8"') portee par des supports isolants (6, 6") d'une chambre de coupure (2) a un contact de laquelle cette pièce conductrice est raccordée, ces couteaux mobiles étant eux aussi orientés verticalement dans une position de service pour laquelle ils sont en contact avec des plots conducteurs (9'), alignes horizontalement en parallèle à la face avant, situes au-dessus de ce sectionneur supplémentaire par rapport au disjoncteur dans le caisson et reliés à des secondes traversées de courant étanches (17'A, 17'B, 17'C) portees par la face supérieure du caisson, ledit sectionneur supplémentaire étant situé derrière l'autre sectionneur par rapport à la face avant du caisson.

4. Cellule selon l'une des revendications 1 à 3, **caractérisée en ce que**, dans une position de mise a la terre, les dits couteaux mobiles, au moins approximativement orientes horizontalement, sont en contact chacun avec un plot de mise à la terre (11) porté par une traverse de renfort (31) horizontale disposee centralement entre des parois latérales du caisson au-dessus des chambres de coupure du disjoncteur

5. Cellule selon l'une des revendications 1 a 4, **caractérisée en ce qu'**elle comporte un sectionneur dont, en position de sectionnement, les couteaux mobiles sont électriquement isolés des plots (9) relies aux premières traversées de courant et des plots de mise à la terre (11) inclus dans le caisson, ces couteaux étant basculés à mi-chemin entre les deux positions de service et de mise à la terre

6. Cellule, selon l'une des revendications 3 à 5, **caractérisée en ce qu'**elle comporte des secondes traversées de courant disposées de telle sorte qu'une seconde traversée de courant, dite centrale, (17'C) soit directement au-dessus du plot et du couteau mobile centraux du sectionneur supplémentaire; que les deux autres secondes traversées de courant (17'A, 17'B) soient diagonalement alignées par rapport à cette seconde traversée de courant centrale et soient respectivement reliées chacune à un plot différent par une seconde barre conductrice individuelle (10'), ces deux secondes barres étant positionnées d'une manière symétrique par rapport à la traversée centrale correspondant au plot central du sectionneur supplémentaire dans le caisson.

7. Cellule, selon l'une des revendications 3 à 6, **caractérisée en ce que** le sectionneur et le sectionneur supplémentaire ont leurs éléments correspondants (7, 7' et 9, 9') disposés à l'alignement et au même niveau horizontal dans le caisson de même que les premières et secondes barres (10, 10') de même phase.

8. Cellule, selon l'une des revendications 1 à 7, **caractérisée en ce qu'**elle comporte un caisson muni de tubes cintrés unipolaires (19) externes qui se raccordent chacun au caisson au niveau d'orifices ménagés dans la partie arrière de la paroi inférieure plane (FI) de ce caisson, qui assurent chacun le passage d'un élément conducteur (20) différent, ce dernier pénétrant dans le caisson pour se connecter à une pièce conductrice fixe (21) portée par au moins un support isolant (6) d'une chambre de coupure (2) au contact fixe de laquelle cette pièce est électriquement reliée et qui permettent chacun le raccordement d'au moins un câble électrique unipolaire (O) par l'intermédiaire d'une traversée de courant étanche (22) logée au niveau d'une extrémité du tube qui la contient et orientée horizontalement et vers l'avant du caisson sous lequel les tubes sont positionnes.

9. Cellule, selon l'une des revendications 1 à 8, **caractérisée en ce qu'**elle comporte un caisson muni de tubes unipolaires droits (24), externes, qui se raccordent chacun au caisson au niveau d'orifices ménagés dans la partie arrière de la paroi inférieure plane de ce caisson, en arrière de ceux prévus pour d'éventuels tubes unipolaires cintrés, qui assurent chacun le passage d'un élement conducteur (25) différent pénétrant dans le caisson pour se connecter à une piece conductrice fixe (21) portée par au moins un support isolant (6) d'une chambre de coupure (2) au contact fixe de laquelle cette pièce est électriquement reliée et qui permettent notamment chacun le raccordement d'une phase d'un transformateur de tension (28) externe

10. Cellule, selon l'une des revendication 3 à 5, **caractérisée en ce qu'**elle comporte des secondes traversées de courant étanches (17'A, 17'B, 17'C) portées par la face supérieure (FS) du caisson en arrière des premières traversées de courant (17A, 17B, 17C) dans une disposition identique à celle de celles-ci par rapport à la face avant (FA) de ce caisson, ces secondes traversées étant respectivement reliées chacune à une des premières traversées par une barre conductrice (10") qui leur est commune et qui est logée à l'intérieur du caisson parallèlement à la face supérieure du caisson, ces barres étant parallèles entre elles

11. Cellule, selon l'une des revendications 3 à 7 **caractérisée en ce qu'**elle comporte un caisson dans lequel le sectionneur (7, 9, 10) et le sectionneur supplémentaires (7', 9', 10') sont symétriquement disposés par rapport à un plan passant par les plots de mise à la terre (11), le sectionneur supplémentaire ayant des couteaux mobiles (7') montés chacun sur une pièce porteuse conductrice (8') fixée sur au moins un support isolant (6) d'une chambre de coupure, les couteaux mobiles du sectionneur supplémentaire étant électriquement reliés chacun à un contact fixe d'une des chambres de coupure (2) au contact mobile de laquelle est électriquement relié un couteau mobile (7) du sectionneur logé dans le même caisson.

12. Cellule, selon la revendication 9, **caractérisée en ce qu'**elle comporte un caisson à sectionneur (7, 9, 10) et sectionneur supplémentaire (7', 9', 10') sont symétriquement disposés par rapport à un plan passant par les plots de mise à la terre (11), le sectionneur supplémentaire ayant des couteaux mobiles montés chacun sur une pièce porteuse conductrice fixe (8") électriquement reliée à un contact fixe d'une des chambres de coupure (2) par l'intermédiaire d'une pièce conductrice fixe (21), que porte au moins un support isolant (6) de cette chambre de coupure, et de deux éléments conducteurs (25, 20) reliés à des traversées étanches (26, 22) et raccordés entre eux à l'extérieur du caisson par l'intermédiaire d'un conducteur isolé et cintré (30) et de connecteurs (27, 29) permettant le montage de transformateurs de courant, de tension à l'extérieur du caisson, la pièce conductrice (8"), un premier des éléments conducteurs (25), le conducteur isolé (30), un second des éléments conducteurs (20) et la pièce conductrice fixe (21) relatifs à un couteau étant électriquement en série dans cet ordre.

13. Cellule, selon l'une des revendications 3 à 9, **caractérisée en ce qu'**elle comporte un caisson dans lequel le sectionneur supplémentaire a des couteaux mobiles (7') qui sont respectivement positionnés chacun avec le couteau mobile (7) de même phase du sectionneur avec lequel il est logé dans le même caisson, sur des pièces porteuses (8.8"'), conductrices, qui sont fixées sur au moins un support fixe et isolant (6) de chambre de coupure et qui sont électriquement reliées entre elles par une liaison qui s'étend dans l'espace existant entre la chambre de coupure auquel le support isolant est affecté et la traverse (31) que comporte le caisson.

14. Cellule, selon l'une des revendications 1, 3, 4, 5, 7, 8, 9, 11, **caractérisée en ce qu'**elle comporte des traversées de courant portées par une face supérieure (FS) du caisson (1""), prévues pour être raccordées à des lignes aériennes de distribution par l'intermédiaire de conducteurs de liaison unipolaires (33) connectés aux parties externes respectives des traversées de courant, chaque conducteur étant muni d'un manchon élastomère isolant (32) qui le recouvre en extrémité et qui s'emmanche sur la partie externe de la traversée de courant à laquelle est connecté ce conducteur.

15. Cellule, selon la revendication 14, **caractérisée en ce qu'**elle comporte des traversées de courant prévues pour être raccordées à des lignes aériennes de distribution par l'intermédiaire de conducteurs de liaison unipolaires (33) qui sont équipés de manchons élastomères isolants et autour lesquels sont montés des transformateurs de courant, de type torique, (34).

16. Cellule, selon l'une des revendications 1 à 15, **caractérisée en ce qu'**elle est remplie d'un gaz diélectrique de protection.

## Patentansprüche

1. Elektrische Schaltzelle mit dichtem metallischen Gehäuse, umfassend zumindest einen Schalter und einen Dreiphasenschalter, zur Verbindung von externen leitenden Streben und/oder externen elektrischen Kabeln, die individuell im Inneren des Gehäuses über dichte Stromdurchgänge verbunden sind, wobei der Schalter über Unterbrechungskammern (2) verfügt, die horizontal und senkrecht zu einer Frontfläche (FA) des Gehäuses angeordnet sind, mittels welcher der Schalter wie auch der Dreiphasenschalter gesteuert wird, wobei letzterer bewegliche Klingen (7) umfasst, die beweglich sind zwischen zumindest einer ersten sogenannten Betriebsposition und einer sogenannten Unterbrechungsposition und die jeweils angelenkt sind an einem leitenden und feststehenden Trägerteil (8), abgestützt an zumindest einer isolierenden Stütze (6) für eine Unterbrechungskammer mit einem beweglichen Kontakt, an dem dieses Teil befestigt ist, **dadurch gekennzeichnet, dass** das parallelepipedische, rechteckige Gehäuse, welches im Idealfall kubisch ist, einen Dreiphasenschalter umfasst, dessen bewegliche Klingen zumindest annähernd vertikal in der Betriebsposition ausgerichtet sind, in welcher Position die Klingen in Kontakt mit leitenden Kontaktstellen (9) stehen, die horizontal und parallel zu der Frontfläche ausgerichtet sind, die sich oberhalb des Dreiphasenschalters mit Bezug auf den Schalter in dem Gehäuse befinden, und die mit ersten, dichten Stromdurchgängen (17A, 17B, 17C) verbunden sind, welche von einer oberen Fläche (FS) des Gehäuses gestützt werden.

2. Schaltzelle nach Anspruch 1 **dadurch gekennzeichnet, dass** sie erste Stromdurchgänge umfasst, die an der oberen Fläche des Gehäuses in solch einer Weise angeordnet sind, dass ein erster mittlerer Stromdurchgang oder -durchtritt (17C) sich unmittelbar oberhalb der Kontaktstelle der mittleren beweglichen Klinge des Dreiphasenschalters befindet, und dass die zwei weiteren ersten Stromdurchgänge diagonal ausgerichtet sind mit Bezug auf den ersten mittleren Stromdurchgang und jeweils verbunden sind mit einer unterschiedlichen Kontaktstelle, über eine erste individuelle leitende Strebe (10), wobei diese Streben parallel verlaufend und auch diagonal angeordnet mit Bezug auf die Frontfläche in einer symmetrischen Art und Weise angeordnet sind, gegenüberstehend im ersten mittleren Durchgang in dem Gehäuse.

3. Schaltzelle nach einem der Ansprüche 1, 2 **dadurch gekennzeichnet, dass** sie ein Gehäuse umfasst, welches einen zusätzlichen Dreiphasenschalter enthält, umfassend bewegliche Klingen (7'), die ebenfalls jeweils an einem feststehenden leitenden Teil (8', 8'' oder 8''') angelenkt sind, gestützt an isolierenden Stützen (6, 6') einer Unterbrechungskammer (2), wobei ein Kontakt davon mit dem leitenden Teil verbunden ist, wobei die beweglichen Klingen ebenfalls vertikal ausgerichtet sind in einer Betriebsposition, in welcher sie in Kontakt stehen mit leitenden Kontaktstellen (9'), die horizontal und parallel zur Frontfläche angeordnet sind, oberhalb des zusätzlichen Dreiphasenschalters, mit Bezug auf den Schalter in dem Gehäuse und verbunden mit zweiten dichten Stromdurchgängen (17'A, 17'B, 17'C), die an der oberen Fläche des Gehäuses gestützt sind, wobei der zusätzliche Dreiphasenschalter sich hinter dem anderen Dreiphasenschalter mit Bezug auf die Frontfläche des Gehäuses befindet.

4. Schaltzelle nach einem der Ansprüche 1 bis 3, **dadurch gekennzeichnet, dass** in einer Erdungsposition die genannten beweglichen Klingen in einer annähernd horizontal ausgerichteten Position jeweils in Kontakt stehen mit einer Erdungskontaktstelle (11), die von einer horizontalen Verstärkungsstrebe (31) gestützt sind, mittig angeordnet zwischen Lateralwandungen des Gehäuses oberhalb der Unterbrechungskammern des Schalters.

5. Schaltzelle nach einem der Ansprüche 1 bis 4, **dadurch gekennzeichnet, dass** sie einen Dreiphasenschalter umfasst, dessen bewegliche Klingen in der Betriebsposition elektrisch isoliert bezüglich der Kontaktstellen (9) vorliegen, die mit den ersten Stromdurchgängen verbunden sind, sowie von den Erdungskontaktstellen (11), die in dem Gehäuse enthalten sind, wobei die Klingen halb verschwenkt sind zwischen den zwei Positionen entsprechend der Betriebsposition und der Erdungsposition.

6. Schaltzelle nach einem der Ansprüche 3 bis 5, **dadurch gekennzeichnet, dass** sie zweite Stromdurchgänge umfasst, in solch einer Weise angeordnet, dass einer der zweiten Stromdurchgänge, mittlerer Stromdurchgang (17'C) genannt, sich unmittelbar oberhalb der mittleren Kontaktstelle und der mittleren beweglichen Klinge des zusätzlichen Dreiphasenschalters befindet, wobei die zwei anderen Stromdurchgänge (17'A, 17'B) diagonal ausgerichtet sind mit Bezug auf den zweiten mittleren Stromdurchgang und jeweils verbunden sind mit einer unterschiedlichen Kontaktstelle durch eine zweite individuelle leitende Strebe (10'), wobei die zweiten Streben in symmetrischer Weise angeordnet sind mit Bezug auf den mittleren Durchgang, entsprechend der mittleren Kontaktstelle des zusätzlichen Dreiphasenschalters in dem Gehäuse.

7. Schaltzelle nach einem der Ansprüche 3 bis 6, **dadurch gekennzeichnet, dass** der Dreiphasenschalter und der zusätzliche Dreiphasenschalter entsprechende Elemente (7, 7' und 9, 9') in Ausrichtung angeordnet und auf entsprechendem horizontalem Niveau in dem Gehäuse aufweisen, wobei entsprechendes gilt bezüglich der ersten und zweiten Streben (10, 10') von entsprechenden Phasens.

8. Schaltzelle nach einem der Ansprüche 1 bis 7, **dadurch gekennzeichnet, dass** sie ein Gehäuse umfasst, welches mit externen, gebogenen, unipolaren Rohren (19) versehen ist, die sich jeweils an das Gehäuse auf der Höhe oder dem Niveau von Öffnungen anschließen, die in dem hinteren Abschnitt der unteren ebenen Wandung (FI) des Gehäuses ausgebildet sind, die jeweils den Durchtritt eines unterschiedlichen leitenden Elementes gewährleisten, wobei letzteres in das Gehäuse tritt, um an einem feststehenden leitenden Teil (21) angeschlossen zu werden, welches von zumindest einer isolierenden Stütze (6) einer Unterbrechungskammer (2) gestützt ist, mit deren feststehendem Kontakt dieses Teil elektrisch verbunden ist und die jeweils den Anschluss von zumindest einem unipolaren elektrischem Kabel (0) unter Zwischenschaltung eines dichten Stromdurchgangs (22) ermöglichen, angeordnet auf der Höhe eines Endes des Rohres, welches es enthält und horizontal und nach vorne bezüglich des Gehäuses unter dem die Rohre angeordnet sind ausgerichtet.

9. Schaltzelle nach einem der Ansprüche 1 bis 8, **dadurch gekennzeichnet, dass** sie ein Gehäuse umfasst, welches mit geraden unipolaren Rohren (24) versehen ist, die extern vorliegen und die sich jeweils an dem Gehäuse auf der Höhe oder dem Niveau von Öffnungen anschließen, die in dem hinteren Abschnitt der unteren ebenen Wandung des Gehäuses ausgebildet sind, und zwar hinter jenen, die ausgebildet sind für eventuelle unipolare gebogene Rohre, die jeweils den Durchtritt eines unterschiedlichen leitenden Elementes (25) in das Gehäuse zum Anschluss an ein feststehendes leitendes Teil (21) ichertellen, welches von zumindest einer isolierenden Stütze (6) einer Unterbrechungskammer (2) gestützt wird, deren feststehender Kontakt mit diesem Teil elektrisch verbunden ist und die insbesondere jeweils den Anschluss einer Phase eines externen Spannungswandlers (28) ermöglichen.

10. Schaltzelle nach einem der Ansprüche 3 bis 5, **dadurch gekennzeichnet, dass** sie zweite dichte Stromdurchgänge (17'A, 17'B, 17'C) umfasst, gestützt an der oberen Fläche (FS) des Gehäuses hinter ersten Stromdurchgängen (17A, 17B, 17C) in einer bezüglich dieser identischen Anordnung mit Bezug auf die Frontfläche (FA) des Gehäuses, wobei die zweiten Durchgänge jeweils mit einer der ersten Durchgänge über eine leitende Strebe (10'') verbunden sind, die diesbezüglich gemeinsam vorliegt und im Inneren des Gehäuses aufgenommen ist, und zwar parallel zu der oberen Fläche des Gehäuses, wobei die Streben untereinander parallel verlaufen.

11. Schaltzelle nach einem der Ansprüche 3 bis 7, **dadurch gekennzeichnet, dass** sie ein Gehäuse umfasst, in welchem der Dreiphasenschalter (7, 9, 10) und der zusätzliche Dreiphasenschalter (7', 9', 10') symmetrisch angeordnet sind mit Bezug auf eine Ebene, die durch die Erdungskontakstellen (11) tritt, wobei der zusätzliche Dreiphasenschalter über bewegliche Klingen (7') verfügt, die jeweils an einem leitenden Trägerteil (8') montiert sind, befestigt an zumindest einer isolierenden Stütze (6) einer Unterbrechungskammer, wobei die beweglichen Klingen des zusätzlichen Dreiphasenschalters elektrisch jeweils verbunden sind mit einem feststehenden Kontakt einer der Unterbrechungskammern (2) mit deren beweglichen Kontakt elektrisch eine bewegliche Klinge (7) des Dreiphasenschalters verbunden ist, der in demselben Gehäuse aufgenommen ist.

12. Schaltzelle nach Anspruch 9, **dadurch gekennzeichnet, dass** sie ein Gehäuse mit einem Dreiphasenschalter (7, 9, 10) und einem zusätzlichen Dreiphasenschalter (7', 9', 10') umfasst, die symmetrisch angeordnet sind mit Bezug auf eine Ebene, die durch die Erdungskontaktstellen (11) tritt, wobei der zusätzliche Dreiphasenschalter bewegliche Klingen umfasst, die jeweils an einer feststehenden leitenden Trägerstelle (8'') montiert sind, elektrisch verbunden mit einem feststehenden Kontakt einer der Unterbrechnungskammern (2) unter Zwischenschaltung eines feststehenden leitenden Teiles (21), das zumindest eine isolierende Stütze (6) der Unterbrechungskammer trägt, sowie von zwei leitenden Elementen (25, 20), die mit dichten Durchtritten (26, 22) verbunden und untereinander äußerlich des Gehäuses unter Zwischenschaltung eines isolierten und gebogenen Leiters (30) und Leitern (27, 29) geschaltet sind, die die Montage von Stromwandlern und von Spannungswandlern außerhalb des Gehäuses ermöglichen, wobei das leitende Teil (8''), ein erstes der leitenden Elemente (25), der isolierte Leiter (30), ein zweites der leitenden Elemente (20) und das feststehende leitende Teil (21) mit Bezug auf eine Klinge elektrisch in Serie geschaltet in dieser Reihenfolge vorliegen.

13. Schaltzelle nach einem der Ansprüche 3 bis 9, **dadurch gekennzeichnet, dass** sie ein Gehäuse umfasst, in welchem der zusätzliche Dreiphasenschalter über bewegliche Klingen (7') verfügt, die jeweils einzeln angeordnet sind mit der beweglichen Klinge (7) der entsprechenden Phase des Dreiphasenschalters mit welchem dieser in demselben Gehäuse aufgenommen ist an leitenden Trägerteilen (8'''), die an zumindest einer feststehenden und isolierenden Stütze (6) einer Unterbrechungskammer befestigt sind, und die elektrisch untereinander verbunden sind über eine Verbindung, die sich in dem Raum erstreckt, der zwischen der Unterbrechungskammer, mit der die isolierende Stütze wechselwirkt, und Strebe (31), die das Gehäuse umfasst, besteht.

14. Schaltzelle nach einem der Ansprüche 1, 3, 4, 5, 7, 8, 9, 11 **dadurch gekennzeichnet, dass** sie Stromdurchtritte umfasst, gestützt von einer oberen Fläche (FS) des Gehäuses 1'''') vorgesehen, um angeschlossen zu werden an Überlandleitungen unter Zwischenschaltung von unipolaren Verbindungs- oder Anschlussleitern (33), die mit jeweiligen externen Abschnitten von Stromdurchgängen verbunden oder geschaltet sind, wobei jeder Leiter mit einer isolierenden elastomeren Manschette (32) versehen ist, die ein Ende bedeckt, und die an dem oberen Abschnitt des Stromdurchtrittes eingreift, mit dem der Leiter verbunden oder geschaltet ist.

15. Schaltzelle nach Anspruch 14, **dadurch gekennzeichnet, dass** sie Stromdurchgänge umfasst, vorgesehen um angeschlossen zu werden an Überlandleitungen unter Zwischenschaltung von unipolaren Verbindungs- oder Anschlussleitern (33), die mit isolierenden elastomeren Manschetten versehen sind und um welche torusartige Spannungswandler (34) montiert sind.

16. Schaltzelle nach einem der Ansprüche 1 bis 15, **dadurch gekennzeichnet, dass** sie mit einem dielektrischen Schutzgas gefüllt ist.

## Claims

1. An electrical bay with a sealed metal tank containing at least one three-phase circuit-breaker and one three-phase disconnector, for interconnecting, via sealed bushings, external conductive busbars and/or external electrical cables individually connected inside the tank, the circuit-breaker having horizontal break chambers (2) perpendicular to a front face (FA) of the tank through which said circuit-breaker and the disconnector are actuated, the disconnector including blades (7) mobile between at least one in-service position and one disconnecting position and each articulated to a fixed conductive support member (8) carried by at least one insulative support (6) of a break chamber to a mobile contact of which said member is connected, **characterized in that** the rectangular parallelepiped-shaped (optimally cubical) tank contains a disconnector whose mobile blades are at least approximately vertically oriented in an in-service position in which said blades are in contact with conductive terminals (9) which are aligned horizontally and parallel to the front face, situated above the disconnector relative to the circuit-breaker in the tank and connected to first sealed bushings (17A, 17B, 17C) supported by a top face (FS) of the tank.

2. A bay according to claim 1, **characterized in that** it includes first bushings on the top face of the tank so that a central first bushing (17C) is directly above the central terminal and the central mobile blade of the disconnector and **in that** the other two bushings are diagonally aligned relative to said central first bushing and are each connected to a respective different terminal by a first individual conductive busbar (10), said busbars, parallel and disposed orthogonally to the front face, being positioned symmetrically with respect to the central first bushing in the tank.

3. A bay according to either claim 1 or claim 2, **characterized in that** it includes a tank containing an additional disconnector with mobile blades (7') also each articulated to a fixed conductive member (8', 8" or 8''') supported by insulative supports (6, 6") of a break chamber (2) to a contact of which said conductive member is connected, said mobile blades being also vertically oriented in an in-service position in which they are in contact with conductive terminals (9') aligned horizontally and parallel to the front face, situated above said additional disconnector relative to the circuit-breaker in the tank and connected to second sealed bushings (17'A, 17'B, 17'C) carried by the top face of the tank, said additional disconnector being situated behind the other disconnector relative to the front face of the tank.

4. A bay according to any of claims 1 to 3, **characterized in that**, in a grounding position, said at least approximately horizontally oriented mobile blades are each in contact with a grounding terminal (11) carried by a horizontal reinforcing crossmember (31) disposed centrally between lateral walls of the tank above the break chambers of the circuit-breaker.

5. A bay according to any of claims 1 to 4, **characterized in that** it contains a disconnector, the mobile blades of which are, in a disconnecting position, electrically isolated from terminals (9) connected to the first bushings and grounding terminals (11) included in the tank, said blades being tilted halfway between the in-service and grounding positions.

6. A bay according to any of claims 3 to 5, **characterized in that** it includes second bushings disposed so that a central second bushing (17'C) is directly above the central terminal and the central mobile blade of the additional disconnector and the other two second bushings (17'A, 17'B) are diagonally aligned relative to said central second bushing and each is respectively connected to a different terminal by a second individual conductive busbar (10'), said two second busbars being symmetrically positioned with respect to the central bushing corresponding to the central terminal of the additional disconnector in the tank.

7. A bay according to any of claims 3 to 6, **characterized in that** the disconnector and the additional disconnector have their corresponding members (7, 7' and 9, 9') disposed in alignment and at the same horizontal level in the tank and likewise the first and second busbars (10, 10') of the same phase.

8. A bay according to any of claims 1 to 7, **characterized in that** it includes a tank provided with external unipolar curved tubes (19) each of which is connected to the tank at orifices formed in the rear part of the plane bottom wall (FI) of the tank and has a different conductive member (20) passed through it, the latter penetrating into the tank to be connected to a fixed conductive member (21) supported by at least one insulative support (6) of a break chamber (2) to the fixed contact of which said member is electrically connected, and each of which connects at least one unipolar electrical cable (O) by means of a sealed bushing (22) at one end of the tube that contains it and oriented horizontally and toward the front of the tank under which the tubes are positioned.

9. A bay according to any of claims 1 to 8, **characterized in that** it includes a tank provided with external straight unipolar tubes (24) each of which is connected to the tank at orifices formed in the rear part of the plane bottom wall of the tank, to the rear of those provided for any curved unipolar tubes, each of which has a different conductive member (25) passed through it to penetrate into the tank to be connected to a fixed conductive member (21) carried by at least one insulative support (6) of a break chamber (2) to the fixed contact of which said member is electrically connected and each of which connects one phase of an external voltage transformer (28).

10. A bay according to any of claims 3 to 5, **characterized in that** it includes second sealed bushings (17'A, 17'B, 17'C) supported by the top face (FS) of the tank to the rear of the first bushings (17A, 17B, 17C) in a disposition identical to that of the latter relative to the front face (FA) of said tank, said second bushings being each connected to a respective one of the first bushings by a conductive busbar (10") that is common to them and is accommodated inside the tank, parallel to the top face of the tank, the busbars being parallel to each other.

11. A bay according to any of claims 3 to 7, **characterized in that** it includes a tank in which the disconnector (7, 9, 10) and the additional disconnector (7', 9', 10') are symmetrically disposed with respect to a plane passing through the grounding terminals (11), the additional disconnector having mobile blades (7') each mounted on a conductive support member (8') fixed to at least one insulative support (6) of a break chamber, each of the mobile blades of the additional disconnector being electrically connected to a fixed contact of one of the break chambers (2) to the mobile contact of which is electrically connected a mobile blade (7) of the disconnector accommodated in the same tank.

12. A bay according to claim 9, **characterized in that** it includes a tank with a disconnector (7, 9, 10) and an additional disconnector (7', 9', 10') which are symmetrically disposed with respect to a plane passing through the grounding terminals (11), the additional disconnector having mobile blades each mounted on a fixed conductive support member (8") electrically connected to a fixed contact of one of the break chambers (2) through the intermediary of a fixed conductive member (21) carried by at least one insulative support (6) of said break chamber and two conductive members (25, 20) connected to sealed bushings (26, 22) and connected to each other outside the tank by means of an insulated and curved conductor (30) and connectors (27, 29) enabling current and voltage transformers to be mounted externally of the tank, the conductive member (8"), a first conductive member (25), the insulated conductor (30), a second conductive member (20), and the fixed conductive member (21) relating to one blade being electrically connected in series **in that** order.

13. A bay according to any of claims 3 to 9, **characterized in that** it includes a tank in which the additional disconnector has mobile blades (7') that are each respectively positioned with the mobile blade (7) of the same phase of the disconnector with which it is accommodated in the same tank, on conductive support members (8, 8''') that are fixed to at least one fixed and insulative support (6) of the break chamber and which are electrically connected together by a connection that extends in the space existing between the break chamber to which the insulative support is allocated and the crossmember (31) of the tank.

14. A bay according to any of claims 1, 3, 4, 5, 7, 8, 9, and 11, **characterized in that** it includes bushings supported by a top face (FS) of the tank (1''''), adapted to be connected to overhead distribution lines through the intermediary of unipolar connecting conductors (33) connected to the respective external parts of the bushings, each conductor being provided with an insulative elastomer sleeve (32) that covers its end and is sleeved over the external part of the bushing to which said conductor is connected.

15. A bay according to claim 14, **characterized in that** it includes bushings adapted to be connected to overhead distribution lines via unipolar connecting conductors (33) provided with insulative elastomer sleeves and around which are mounted toroidal current transformers (34).

16. A bay according to any of claims 1 to 15, **characterized in that** it is filled with a protective dielectric gas.
